# EUROPÄISCHE PATENTANMELDUNG

(11) **EP 1 615 284 A2**
(43) Veröffentlichungstag der Anmeldung: **11.01.2006**
(21) Anmeldenummer: 05012598.8
(22) Anmeldetag: 11.06.2005
(51) Int. Cl.: H01M 8/06

(54) **Brennstoffzellensystem**

(30) Priorität: 06.07.2004 DE 102004032515
(71) Anmelder: FORSCHUNGSZENTRUM JÜLICH GMBH, 52425 Jülich (DE)
(72) Erfinder: Müller, Martin, 53115 Bonn (DE); Dohle, Hendrik, 52224 Stolberg (DE); Mergel, Jürgen, 52428 Jülich (DE)

(57) **Zusammenfassung**

Die Erfindung betrifft ein Brennstoffzellensystem insbesondere aus Polymerelektrolytmembran-Brennstoffzellen oder Hochtemperatur-Brennstoffzellen, wobei die einzelne Brennstoffzelle und/oder der Brennstoffzellenstapel eine äußere Schutzvorrichtung mit wenigstens einer mit Katalysator beschichteten Fläche aufweist. Als Katalysator sind insbesondere Platin oder eine Platinlegierung geeignet. Die äußere Schutzvorrichtung kann insbesondere ein Gewebe, ein Vlies oder auch eine Platte umfassen.

Die äußere Schutzvorrichtung bewirkt vorteilhaft, dass eventuell aus der Brennstoffzelle oder dem Brennstoffzellensystem austretende toxische und/oder explosive Gase kontrolliert an den mit Katalysator beschichteten Flächen zu ungiftigen bzw. nicht mehr explosiven Medien abreagieren.

## Beschreibung

Die Erfindung betrifft ein Brennstoffzellensystem und zwar sowohl ein Polymerelektrolytmembran-Brennstoffzellensystem (PEM-FC) als auch ein Hochtemperatur-Brennstoffzellensystem.

### Stand der Technik

Brennstoffzellen arbeiten teilweise mit gefährlichen Betriebsmitteln. Dies kann im Fall von Polymerelektrolytmembran-Brennstoffzellen (PEM-FC) giftiges Methanol oder explosiver Wasserstoff sein. Bei Hochtemperatur-Brennstoffzellen könnten Kohlenmonoxid, Methan, reiner Wasserstoff und andere brennbare Gase austreten. Beim Betrieb derartiger Brennstoffzellen muss daher in der Regel ein hoher Sicherheitsstandard eingehalten werden, damit einerseits der Austrag von giftigen Gasen und Dämpfen verhindert werden kann und/oder andererseits keine explosionsgefährlichen Gase oder Dämpfe aus den Brennstoffzellen entweichen können. Gerade bei der Benutzung von Brennstoffzellen bei einem Endverbraucher, z. B. in einem Laptop oder einem Handy, kann ein möglicher Austrag von giftigen Methanoldämpfen zu einer starken Gesundheitsgefährdung führen.

### Aufgabe und Lösung

Aufgabe der Erfindung ist es, ein Brennstoffzellensystem zu schaffen, bei dem die Gefahr einer Gesundheitsgefährdung durch austretende giftige und/oder explosionsgefährliche Gase beseitigt oder zumindest stark reduziert wird.

Die Aufgabe der Erfindung wird gelöst durch ein Brennstoffzellensystem mit der Gesamtheit an Merkmalen gemäß Hauptanspruch. Vorteilhafte Ausführungen des Brennstoffzellensystems finden sich in den darauf rückbezogenen Ansprüchen.

### Gegenstand der Erfindung

Der Gegenstand der Erfindung betrifft ein neuartiges Brennstoffzellensystem, bei dem eine aus dem Stand der Technik bekannte Brennstoffzelle, bzw. ein Brennstoffzellenstapel mit einer äußeren Schutzvorrichtung versehen ist.

Diese äußere Schutzvorrichtung kann in Form eines Gewebes, eines Filters oder auch eines zusätzlichen Gehäuses vorliegen. Die äußere Schutzvorrichtung weist wenigstens eine mit Katalysator beschichtete Fläche auf, an der giftige und/oder explosive Medien mit Sauerstoff bei niedrigen Temperaturen zu ungefährlichen Medien kontrolliert abreagieren können. Als geeignete Katalysatoren haben sich insbesondere Platin oder Platinlegierungen herausgestellt, die eine sehr große reaktive Oberfläche aufweisen und auch bei moderaten Temperaturen sehr reaktiv sind.

An einer mit Platin beschichteten Fläche kann beispielsweise giftiges gasförmiges Methanol mit Luft oder Sauerstoff zu unschädlichem Wasser und CO₂ reagieren.

Auch reiner Wasserstoff, der in größeren Mengen mit Sauerstoff zu einem explosiven Gemisch werden kann, kann so in kleineren Mengen mit Sauerstoff oder Luft kontrolliert direkt an einem Katalysator zu Wasser umgesetzt werden. Eine Aufkonzentrierung von Wasserstoff bis über die Explosionsgrenze wird so regelmäßig vermieden.

Sollte es dennoch ungewollt zu einer Explosion einer Brennstoffzelle oder eines gesamten Stapels kommen, so bewirkt der Schutzmantel vorteilhaft einen guten Schutz vor umherfliegenden Einzelteilen, wie Splittern etc..

### Spezieller Beschreibungsteil

Nachfolgend wird der Gegenstand der Erfindung näher erläutert, ohne dass der Gegenstand der Erfindung dadurch beschränkt wird.

Als ein geeignetes Ausführungsbeispiel der Erfindung kann ein mit Katalysator beschichtetes Gewebe aus reißfesten Fasern genannt werden, welches eine einzelne Brennstoffzelle oder auch einen gesamten Brennstoffzellenstapel umhüllt. Es kann sich hier zum Beispiel um ein Polyamidgewebe handeln.

Im Sinne der Erfindung ist auch ein mit Katalysator beschichtetes poröses Vlies als Filter eine geeignete äußere Schutzvorrichtung für eine Brennstoffzelle denkbar.

Ferner können auch eine oder mehrere mit Katalysator beschichteten Verkleidungsplatten einer Brennstoffzelle oder eines Brennstoffzellenstapels als geeignete äußere Schutzvorrichtungen angesehen werden.

Die Schutzhülle kann sowohl um den Zellstapel, als auch um das gesamte System angebracht werden. Die Ummantelung des Gesamtsystems kann die Sicherheit deutlich verbessern, da so der Nutzer auch vor Leckagen in Tanks und Leitungen geschützt wird.

## Patentansprüche

1. Brennstoffzellensystem **dadurch gekennzeichnet, dass** eine Brennstoffzelle oder ein Brennstoffzellenstapel eine äußere Schutzvorrichtung mit wenigstens einer mit Katalysator beschichteten Fläche aufweist.

2. Brennstoffzellensystem nach vorhergehendem Anspruch 1 umfassend wenigstens eine Polymerelektrolytmembran-Brennstoffzelle oder eine Hochtemperatur-Brennstoffzelle.

3. Brennstoffzellensystem nach einem der vorhergehenden Ansprüche 1 oder 2, mit Platin oder eine Platinlegierung als Katalysator.

4. Brennstoffzellensystem nach einem der Ansprüche 1 bis 3, mit einem mit Katalysator beschichteten Gewebe als äußere Schutzvorrichtung.

5. Brennstoffzellensystem nach einem der Ansprüche 1 bis 3, mit einem mit Katalysator beschichtetem Vlies als äußere Schutzvorrichtung.

6. Brennstoffzellensystem nach einem der Ansprüche 1 bis 3, mit einer mit Katalysator beschichteten Verkleidungsplatte als äußere Schutzvorrichtung.
